# EUROPEAN PATENT SPECIFICATION

(11) **EP 0 780 208 B1**
(45) Date of publication and mention of the grant of the patent: **11.08.1999**
(21) Application number: 96120581.2
(22) Date of filing: 20.12.1996
(51) Int. Cl.: B29C 45/14, B29C 45/84

(54) **Insert molding system**
Einsatzformsystem
Système de moulage utilisant un insert

(30) Priority: 22.12.1995 US 577826; 22.12.1995 US 577870
(43) Date of publication of application: 25.06.1997
(73) Proprietor: HUSKY INJECTION MOLDING SYSTEMS LTD., Bolton Ontario L7E 5S5 (CA)
(72) Inventor: Schad, Robert D., Toronto, Ontario M6G 2V5 (CA); Young, William C., Ypsilanti, Michigan 48198 (US)
(74) Representative: Weiss, Peter, Dr. rer. nat.

(56) References cited:
- DE-A- 3 611 154
- DE-A- 3 742 586
- US-A- 4 178 984
- PATENT ABSTRACTS OF JAPAN vol. 13, no. 10 (M-782), 11 January 1989 & JP 63 220967 A (AISIN SEIKI CO LTD), 14 September 1988,

## Description

### BACKGROUND OF THE INVENTION

This invention is directed to a system for manufacturing layered preforms from inserts according to the first part of claim 1

For molding systems, various processing steps are typically necessary to place an article to be further molded into proper position for such molding. This is particularly true in overmolding processes where one article having already been molded or finished in earlier processes is enlarged or altered through an additional molding process. In many systems, the article to be further processed, for example, through overmolding, is not subject to all handling and processing procedures by one comprehensive machine. Processing steps which may comprise such systems include aligning and orienting the articles, moving the articles to the molding machine, molding or overmolding the articles and removing the articles from the machine for subsequent packaging or further processing. The prior art includes systems or machines directed to these processing steps but fails to disclose a comprehensive machine for systematically performing all of the processed steps.

Article aligning and distributing devices are shown in the US-A-3,827,856 and the US-A-4,832,176. These patents show two different techniques for aligning and handling articles.

The US-A-3,827,856 discloses an apparatus for loading inserts onto insert receiving seats of a mold. The apparatus is directed for use in mass manufacturing of elongated hollow plastic objects, having inserts at the ends thereof, such as ballpoint pens. The inserts are automatically loaded by vibrating the same into pockets and then lifting them out of the pockets into suction tubes which pass to a horizontal transfer plate and into nests in a vertical transfer plate. A vacuum is employed to maintain the inserts in the nests during movement of the vertical transfer plate to a position adjacent the distal ends of hollow core pins through which air is sucked. The vacuum in the vertical transfer plate is then converted to pressure to cause the inserts to fly across the air gaps of the core pin ends, following which the inserts are maintained on such ends by suction. A mold is enclosed to cause the inserts to engage spring bias plungers, and then plastic is injected.

The US-A-4,832,176 discloses a system for automatically distributing and supplying parts. The system includes a base displaceable with respect to a foundation and first and second positioning members fixed to the base at different heights. A movable body is mounted on the base and movable toward and away from a parts installing device by an actuator. A parts feed mechanism is provided which has an angularly movable arm and is mounted on the movable body. A holder is mounted on the arm such that the movable body is displaced by the actuator toward the parts installing device. This allows the holder to supply the parts to the parts installing device after the parts delivered from the parts distributing device to the first positioning member have been delivered through flexible tubular members to the second positioning member. The parts are positioned and held in the holder and the holder is brought into confronting relation to the parts installing device in the parts discharge position.

Accordingly, these patents show only parts handling and aligning systems and not a comprehensive all purpose system for forming multilayered preforms.

Another step in forming preforms is molding or overmolding. The US-A-4,067,944 is directed to overmolding systems.

This patent discloses a method for obtaining a multi-layered, hollow plastic article having side walls which are oriented in the axial, radial and tangential directions. Plastic material is injection molding about an insert covered core to form a multi-layered parison which is then transferred on the core to first and second blow molds for blow molding to a hollow article. A parison mold and core are maintained in axial alignment in the insert and blow molds are moved therebetween for engagement with the core. In the US-A-4,067,944 all transfer takes place for movement of the insert from injection molding to blow molding and accordingly, is not directed to the handling and orientation of the insert prior to molding.

The unloading or transfer of articles to be molded is another step found in molding processes. Particularly, the article is moved from a first position to a second position where at the second position, the article can be oriented for the molding operation.

U.S. Reissue Patent Re.33,237 discloses an apparatus for producing hollow plastic articles. The apparatus includes an injection molding machine having a first mold portion with at least one cavity therein and a second mold portion having at least one elongated core, which core is adapted to seat in the cavity in the mold closed position. Accordingly, in the mold closed position, a first number of hot hollow plastic articles and an injection molding cycle is formed. A means for reciprocating is provided for reciprocating the mold portions from the mold closed position to a mold open position for forming a gap between the mold portions. A carrier plate means is also provided having at least two sets of cavities therein for cooling the hollow plastic articles. The number of cavities in the carrier plate corresponds to a multiple of at least two times the number of hollow plastic articles produced in an injection molding cycle. A means for moving is also provided for moving the carrier plate means into and out of the gap. In addition, a means for aligning, one set at a time, the carrier plate means cavities to juxtapose the set of cavities with the hollow plastic articles formed in an injection molding cycle, is provided. Finally, a means for transferring the hollow plastic articles to the juxtaposed cavities is also provided.

The US-A-4,942,008 discloses a process for molding a multiple layer structure. In this process, a plastic sleeve is placed and then enclosed in a mold cavity. A flowing heated plastic is conducted into the mold cavity, radially inside the sleeve, and forced radially outward against the sleeve. The flowing plastic forces the sleeve outward and forms, with the sleeve, an integrally bonded laminated structure. The mold is opened and the plastic structure is removed, and this structure may then be reformed to form a container particularly suitable for containing beverages, foods, cosmetics, pharmaceuticals and chemicals.

While Re.33,237, US-A-4,942,008 and US-A-4,067,944 disclose molding systems and processes, each of the patents fails to disclose a comprehensive system for sorting, handling, transporting, and molding inserts.

Yet another step that is used in the molding system processes, is that of sensing the positions of the articles to be molded or overmolded so as to verify their positions and presence. The following systems are directed to position sensing.

US-A-3,677,680 discloses a fluidic sensing device for molding systems. The system disclosed employs fluidic sensing and fluidic control logic to provide alarm signals that prevent loading of molding compound into the mold cavity when the insert in one or more of a group of mold cavities is not properly seated. The system also prevents closing of the mold and insertion of an insert bearing mandrel when all inserts of a previous operation have not been withdrawn from the cavities. A vacuum drawn on the hollow mandrels retains the insert in place upon the end of the mandrel, cools the mandrels, and cooperates with the fluid sensing devices to indicate the presence or absence of the inserts.

An article dated July, 1988 in the publication Plastics World, discloses a system using a closed circuit television camera for visually inspecting mold cavities. The system detects changes from light to dark and alarms the machine if a dark object remains after ejection, signifying a part has remained stuck in the cavity.

US-A-5,286,426 discloses a method for assembling a lead frame between a pair of molding cavity plates. This method uses light detection means for determining the correct positioning of an inserted part in a molding operation.

While each of these references show sensing systems, neither disclose a comprehensive sensing system for use with a comprehensive insert handling and overmolding system.

There exists, therefore, a need for a comprehensive system for use in conjunction with an injection molding machine for properly unscrambling, handling, moving and overmolding articles, while sensing the absence and presence of the articles throughout movement through the system.

A system for manufacturing multi-layered preforms from insert according to the present invention is also shown in the DE 37 42 586 A1. This reference comprises means for overmolding said inserts into said multi-layered preforms, means for arranging said inserts into proper position for subsequent relocation to said means for molding, a first and second loading station and means for moving said inserts from the first to the second loading station and from the second loading station to said means for molding. Furthermore the reference discloses also means for detecting wether all inserts are present or not.

### SUMMARY OF THE INVENTION

One object of this invention is to provide a comprehensive system for handling preform inserts for subsequent overmolding to form multi-layered preforms, wherein the system continuously operates to unscramble, arrange, transport, sense, and overmold the inserts.

Still another object of this invention is to provide a comprehensive system for overmolding preform inserts, which system and process are operative to unscramble and insert inserts into a mold as well as removed finished preforms from the mold and direct the same to a removal station.

And still another object of this invention is to provide a comprehensive system for overmolding preform inserts to form multi-layered preforms, which system includes a system for continually tracking the presence or absence of the preform inserts in various stages of the system.

These objects and advantages are achieved by the system for manufacturing multi-layered preforms from inserts according of the second part of claim 1.

The details of the present invention are set out in the following description and drawings wherein like reference characters depict like elements.

### BRIEF DESCRIPTION OF THE DRAWINGS

FIG. 1 is an overhead schematic view of an insert handling system in accordance with the principles of the present invention;
FIG. 2 is a front elevational schematic view of the insert handling system shown in FIG. 1;
FIG. 2A is a bottom view taken along line 2A-2A of FIG. 2;
FIG. 3 is an enlarged view of the insert transfer and loading mechanism of FIG. 1;
FIG. 4 is an end elevational view taken along line 4-4 of FIG. 3;
FIG. 5 is an enlarged view of the injection molding system also shown in FIG. 1; and
FIGS. 6A and 6B show elevational views of the various preform inserts which can be used with the present invention.

### DETAILED DESCRIPTION OF THE PREFERRED EMBODIMENT

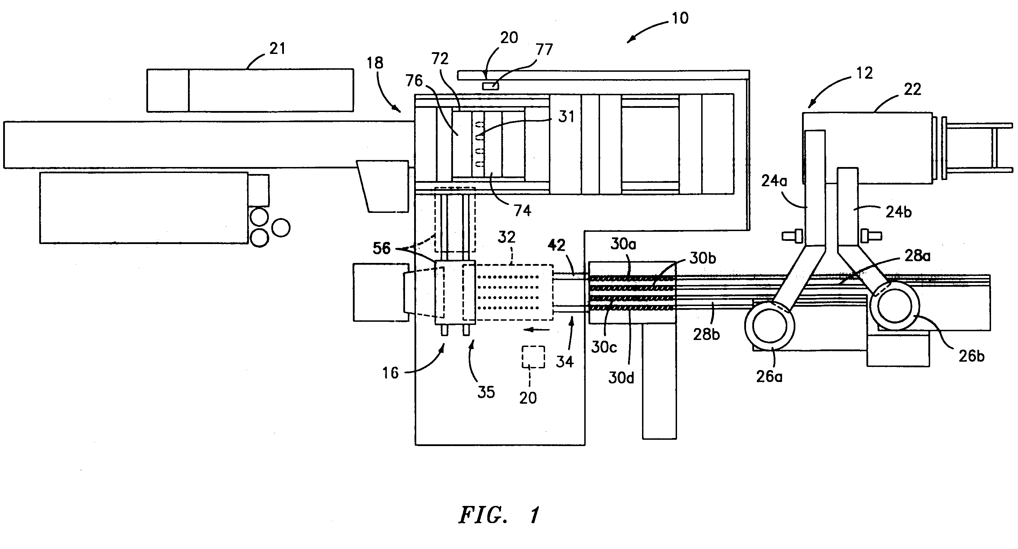

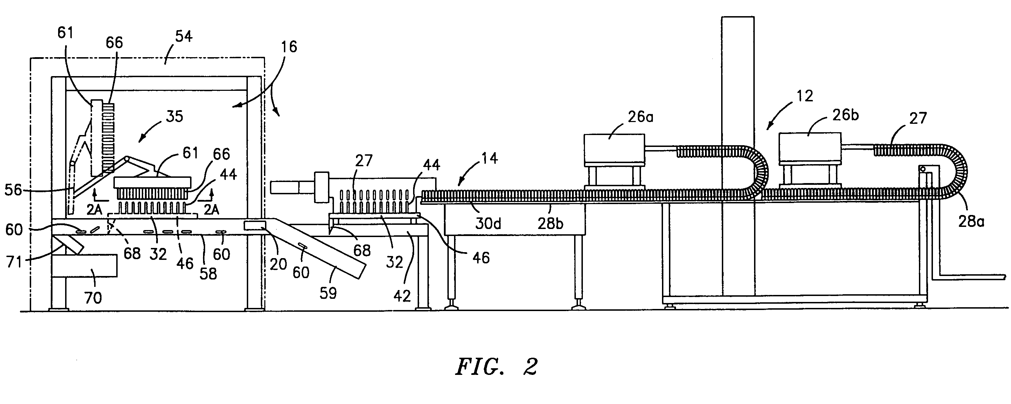

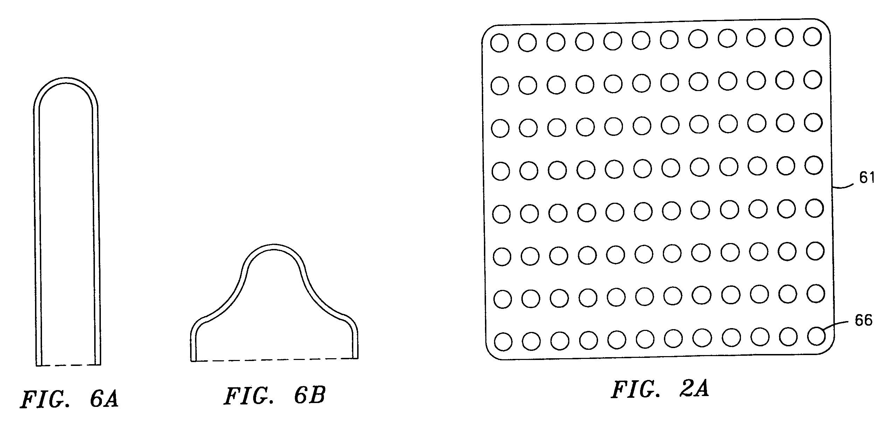

Referring now to the drawings in detail, there is shown in FIG. 1 an overhead view of the preform insert molding system of the present invention, designated generally as 10. System 10 generally includes insert unscrambling station 12, insert array forming mechanism 14, insert transferring and loading mechanism 16, and overmolding station 18. System 10 further includes an insert detection system 20 (shown schematically) operative to sense or detect the presence and absence of inserts while the inserts are moved through the system and a controller 21 for automating the system. FIG. 2 provides an elevational view of system 10 including the elements mentioned above.

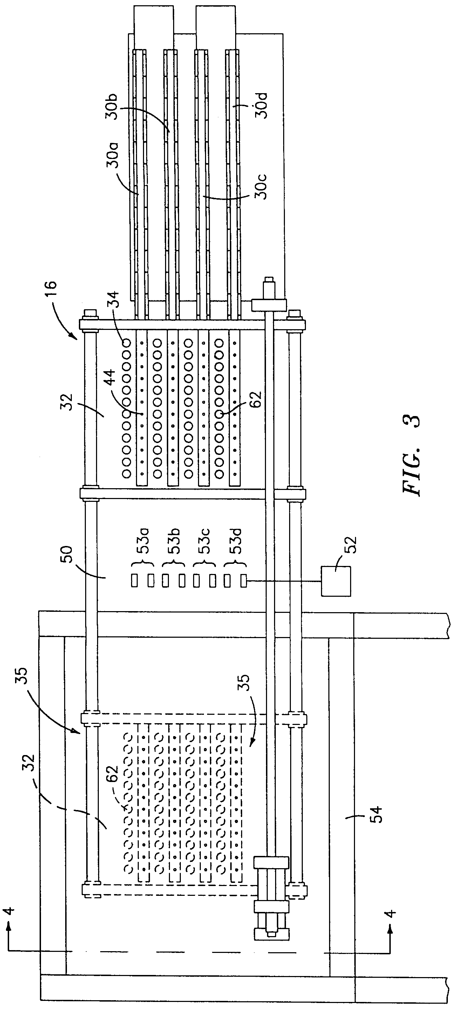

Unscrambling system 12 includes a bulk feeding unit 22, as shown in FIGS. 1 and 2, and infeed conveyers 24a and 24b for feeding inserts from unit 22 to bowl feeders 26a and 26b, respectfully. The inserts 27, as shown in FIG. 2, are unscrambled in bowl feeders 26a and 26b and arranged such that inserts 27 are output from the bowl feeders in an upright position and substantially side by side. Inserts 27 are moved from bowl feeders 26a and 26b onto infeed conveyers 28a and 28b in the upstanding side by side orientation. Referring also to FIG. 3, linear spacing devices such as feed screws 30a-30d are provided downstream of infeed conveyers 28a and 28b. Feed screws 30a-30d are operative to space apart inserts 27 such that they are positioned to match the positions of mold cores 31 in overmolding station 18, as shown by dotted lines in FIG. 1, for a subsequent injection molding step, discussed below. Accordingly, as discussed in more detail below, the feed screws function to place inserts 27 in a number of rows having a prescribed number of inserts so as to match the layout of mold cores 31. In the preferred embodiment, the four feed screws 30a-30d are operative to place groups of inserts 27 in a layout comprising four rows, wherein each row includes twelve equally spaced inserts. An unscrambling unit such as that shown in U.S. Patent 4,832,176 to Okuma et al., issued May 23, 1989, can be used with this invention and accordingly, is hereby incorporated herein.

From the feed screws 30a-30d, inserts 27 are delivered in the spaced apart multi-row orientation to the insert transfer and loading mechanism 16, as shown in FIGS. 2-4.

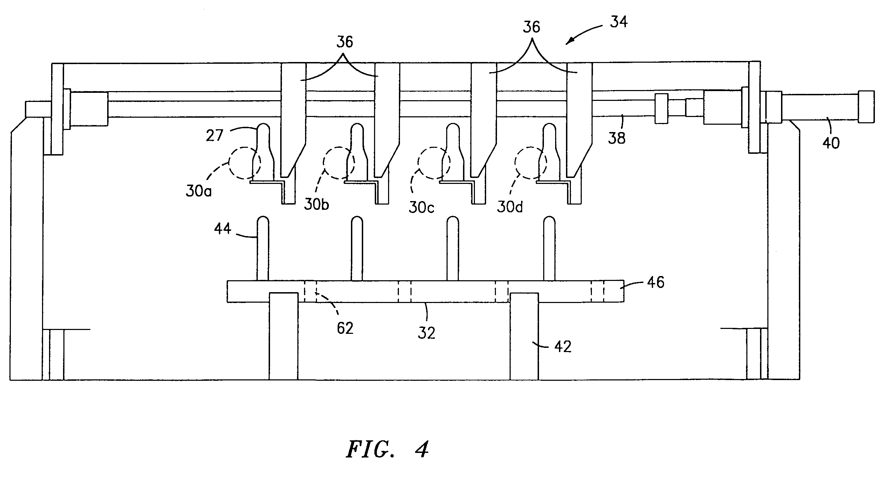

Transfer and loading mechanism 16 includes a shuttle table 32 adapted to receive the arrayed preforms from a first loading station 34 and move the inserts to a second loading station 35, as indicated by the dotted lines representing shuttle table 32 in FIGS. 1-3. As shown in FIG. 4, first loading station 34 preferably comprises an enclosure which collects the spaced inserts from feed screws 30a-30d. As inserts 27 are moved into first loading station 34, they are supported by movable flaps 36 positioned under inserts 27, as shown in FIG. 4. Flaps 36 are mounted to a movable arm 38 connected with a cylinder 40. As cylinder 40 is actuated, movable arm 38 is moved, thereby moving flaps 36 out from under inserts 27. Shuttle table 32 is preferably movable between first loading station 34 on tracks 42 so as to move from first loading station 34 to a second loading station.

Shuttle table 32 also includes a plurality of elements in the form of mandrels or pins 44 extending upwardly from a base 46, which base 46 is preferably mounted on tracks 42. Mandrels 44 are positioned on base 46 in the same arrangement in which inserts 27 were orientated via feed screws 30a-30d. That is, mandrels 44 are preferably provided in four rows, wherein each row includes 12 mandrels in the same spacing as inserts 27, as shown in the side and end views of FIGS. 2 and 4. Mandrels 44 are therefore aligned with inserts 27 and have an outside diameter slightly less than the inside diameter of the inserts. Accordingly, when movable flaps 36 are moved from under inserts 27 via cylinder 40 and movable arm 38, inserts 27 are released onto mandrels 44 for subsequent movement to second loading station 35.

En route to second loading station 35, as indicated by the dotted lines, insert detection system 20 is operable for determining the absence and presence of inserts 27 on mandrels 44. Preferably, sensors 50 are positioned adjacent base 46 and mandrels 44 of shuttle table 32 so as to sense the presence and absence of the inserts. Preferably, four sets of light transmitter/detector units 53a-53d (shown schematically) are used which comprise sensors 50 and are mounted on a support (not shown) astride each of the four parallel lines of mandrels, as shown in FIG. 3. The type of system used is not critical, and accordingly, other sensing systems can be used as well, including mechanical systems, which physically, through feelers, test the absence and presence of inserts on mandrels 44 and provide a signal indicating the result. As shuttle table 32 moves towards second loading station 35, each mandrel is preferably checked via one of sensors 50 so that the presence of an insert on the mandrel is determined. If an insert is determined as missing through transmitter/detector units 53a-53d en route to second loading station 35, preferably via a breakage in a light beam, an indicator, preferably an alarm 52, shown schematically, is activated. At this juncture, the operation may be altered to correct the problem. Preferably, controller 21 is used to command the shuttle table to recycle with the first loading station for adding the absent insert. Otherwise, the cycle can be aborted and the mandrels entirely reloaded with inserts.

Second loading station 35 is preferably positioned in an enclosure 54 which houses a robot 56 (shown schematically) for moving inserts 27 from shuttle table 32 to overmolding station 18. Below tracks 42 a table 58 is preferably provided for receiving finished multilayered preforms 60 unloaded from tooling plate 61 of robot 56 on its return from overmolding station 18. Table 58 may also receive rejected preforms or inserts from tooling plate 61. For transferring inserts from mandrels 44 of shuttle table 32, robot 56 is moved into position above the shuttle table. For receiving finished preforms 60 from robot 56, base 46 of shuttle table 32 includes a plurality of openings 62 therein for the pass through of preforms released from robot 56, as shown in FIGS. 3 and 4. Openings 62 are positioned between the rows of mandrels 44 such that there are four rows of openings 62, preferably twelve in a row in the same spacing as mandrels 44 and mold cores 31 of overmolding station 18. Accordingly, as shown in the overhead view in FIG. 3, adjacent each row of mandrels is preferably a row of openings.

Tooling plate 61 is movable between second loading station 35 and overmolding station 18 for relocating the inserts 27. Tooling plate 61 may be movable through approximately 90° upwardly after engaging the inserts, as shown by the dotted line representation of robot 56 in FIG. 2, and prior to moving the inserts to overmolding system 18. Subsequently, tooling plate 61 via robot 56 preferably moves straight from second loading station 35 to the overmolding station 18, as indicated in FIGS. 1 and 2. The actual path of movement is not critical, however, and accordingly, tooling plate 61 may be movable to overmolding station 18 via another path. Robot tooling plate 61 includes a plurality of mechanisms such as vacuum tubes 66, which tubes 66 are operative to remove inserts 27 from mandrels 44 and remove preforms 60 from overmolding station 18, by functioning to engage and release the same. Robot tooling plate 61 is operative to both release finished preforms 60 into openings 62 as well as engage and remove preform inserts 27 from mandrels 44. Accordingly, vacuum tubes 66 are arranged in one grouping of four rows of twelve adapted to be aligned with mandrels 44 and in another grouping of four rows of twelve, as shown in FIG. 2A, adapted to be aligned with openings 62. Tooling plate 61 via tubes 66 preferably applies vacuum through tubes 66 for removing inserts 27 from mandrels 44. By releasing the vacuum in tubes 66 and preferably blowing air through the tubes, finished preforms 60 are released into openings 62 in base 46 of a shuttle table 32. When preforms 60 are released into openings 62, the preforms are captured on table 58.

On its return trip to first loading station 34 to acquire more inserts on mandrels 44, shuttle table 32 moves finished preforms 60 over table 58 and down chute 59 for subsequent removal for packaging or further processing. This is preferably accomplished by shuttle table 32 including a flap or scraper 68 extending from the bottom of base 46 and down to the surface of table 58 for displacing the rejected preforms or inserts and the finished preforms. Accordingly, flap 68 scrapes over table 58, pushing finished preforms 60 down chute 59.

In a similar manner, shuttle table 32 moves rejected or aborted preforms 60 into a discard area 70. If, through insert detection system 20, an insert 27 is sensed as not present at the overmolding station 18, as discussed further below, the entire group of inserts may be discarded. Accordingly, prior to the return of shuttle table 32 to second loading station 35, robot tooling plate 61 releases any rejected preforms 60 onto table 58. En route from first loading station 34 to second loading station 35, flap 68 functions to move rejected preforms 60 into discard area 70 down chute 71 in the same manner as discussed above with reference to moving the finished preforms for further processing or packaging.

While shuttle table 32 is moving en route from second loading station 35 to first loading station 34, tooling plate 61 is operative to move arrayed inserts 27 from second loading station 35 to overmolding station 18.

En route from second loading station 35 back to first loading station 34, insert detection system 20 is operative to recheck mandrels 44 of shuttle table 32 using the same transmitters/detectors 53a-53d, to detect the absence of inserts 27 on mandrels 44. If an insert is detected on one of mandrels 44, alarm 52 is again sounded to prevent injection molding at overmolding station 18, which would produce an incomplete and possibly dangerous part. Accordingly, if alarm 52 is signaled, robot tooling plate 61 may be recycled under the command of controller 21 which signals the tooling plate, along with shuttle table 32 for another attempt at picking up the missing insert. Otherwise, the entire batch of inserts may be aborted in a manner similar to as discussed above with regard to rejected preforms.

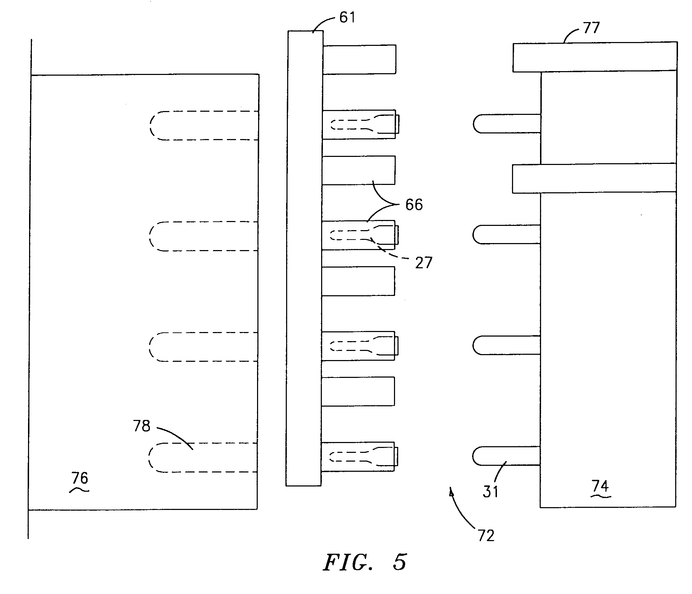

Referring to FIG. 5, robot tooling plate 61 moves inserts 27 into an injection molding machine 72 for overmolding additional layers over insert 27 for forming preform 60, which is desirably multi-layered. Accordingly, robot tooling plate 61 is operative to load inserts 27 onto mold cores 31 of mold portion 74 positioned in injection molding machine 72. Mold cores 31 are arranged, as discussed above, in four parallel rows of twelve equally spaced cores, such that they are in perfect alignment with inserts 27 provided from robot tooling plate 61. Tooling plate 61 is preferably, therefore, movable adjacent the cores of the injection molding machine and functions to place inserts 27 into alignment with respective mold cores 31 of mold portion 74. The vacuum is preferably released in vacuum tubes 66 and air blown therethrough, thereby releasing inserts 27 and forcing inserts 27 onto mold cores 31. With inserts 27 on mold cores 31, air may be evacuated between inserts 27 and cores 31 as insert 27 slides onto the core. Such evacuation can be accomplished via vents (not shown). Optionally, a vacuum could be applied at the core vents to assist in the transfer of the inserts from the vacuum tubes and also to assist in the retention of the inserts on the mold cores as the mold is closed.

Before the mold closes, insert detection system 20 is preferably again operative to detect the presence and absence of inserts 27. Accordingly, insert detection system 20 preferably includes a camera, shown schematically as system 77, directed at the mold cores to detect if an insert 27 is missing therefrom. The system 77 including a camera preferably detects the level of light reflection at the mold cores, which level is indicative of the presence and absence of inserts. An insert detection system such as that used with U.S. Patent 5,286,426, can be used with this invention and is hereby incorporated by reference. However, the type of system used is not necessarily critical and other systems can be used for detecting the presence and absence of inserts on the mold cores. Such systems 77 may include a mechanical system which function to physically test the presence and absence of inserts through the use of mechanical feelers. Also, a vacuum system can be used to test the presence and absence of inserts in the tubes of the robot tooling plate, wherein the level of vacuum pressure is indicative of the absence and presence of the inserts. If an insert 27 is detected as missing, an alarm, preferably alarm 52, is signaled and a reload cycle can optionally be attempted wherein the robot tooling plate 61 is returned to its position adjacent mold cores 31, under the command of controller 21, for a new attempt at releasing any previously unreleased inserts or the entire shot of inserts can be rejected.

Alternatively, each insert can be marked with a detectable mark prior to overmolding. A detection system (not shown) can be used to scan the molded preforms for the marks which indicate an insert was used during overmolding. If a mark is not detected, the preform or entire shot of preforms are rejected.

Referring still to FIG. 5, through injection molding machine 72, layers of resin, preferably PET, are injection molded over inserts 27 to in cavities 78 of mold portion 76, forming preforms 60, having at least two layers. U.S. Patent 4,842,008 to Cahill, issued July 17, 1990, discloses a molding process which may be used with the present invention and is hereby incorporated by reference. After molding, the mold portions 74 and 76 of injection molding machine 72 are opened and robot tooling plate 61 is operative to remove finished preforms 60 from the mold cores and place the same into a carrier plate (not shown) and into a set of cooled preform carrier cavities. Alternatively, the carrier plate may be moved in position relative the mold cores and the finished preforms may be blown or otherwise removed from the mold cores and into the preform carrier cavities. U.S. Re. Patent 33,237 to Delfer, III and assigned to the assignee of the instant invention, discloses the design and operation of the carrier plate desirably used with this invention in detail, and accordingly such disclosure is hereby incorporated by reference into this detailed description. After cooling in the carrier plate, robot tooling plate 61 is then operative to move finished preforms 60 to table 58 and chute 59, as discussed above.

With reference to FIG. 6A and 6B, either one of the preform inserts, i.e. the elongated preform insert shown in FIG. 6A or the shorter wider preform shown in FIG. 6B, for example, can be used with the system described in detail above. Of course, various other insert shapes may be used with this system.

In operation, and with reference to FIGS. 1-5, preform inserts 27 are moved from bowl feeders 26a and 26b onto infeed conveyers 28a and 28b of unscrambling station 12. Inserts 27 are fed into feed screws 30a-30d and are aligned in a four row by twelve insert array for subsequent alignment and placement into an injection molding machine with similarly aligned mold cores. Feed screws 30a-30d feed inserts 27 into first loading station 34 whereat inserts 27 are supported in first loading station 34 via movable flaps 36. Movable shuttle table 32 is positioned under first loading station 34 and upon movement of movable flaps 36 via the actuation of movable arm 38 and cylinder 40, inserts 27 are dropped onto mandrels or pins 44 extending upwardly from shuttle table 32. Shuttle table 32 is preferably moved along tracks 42 to second loading station 35 where en route, insert detection system 20 is preferably operative to scan the rows of inserts 27 via sensors 50 to determine the presence or absence of inserts on mandrels 44. If inserts are detected as absent from mandrels 44, an alarm 52 is preferably sounded and the operation may be stopped and/or recycled for the placement thereon of the missing insert.

Shuttle table 32 moves inserts 27 positioned in the desired array to second loading station 35 positioned within enclosure 54. Robot 56 including robot tooling plate 61 removes inserts 27 from mandrels 44 of shuttle table 32 while simultaneously releasing finished preforms 60 into openings 62 in shuttle table 32. Finished preforms 60 fall through openings 62 onto table 58. After inserts 27 are removed from mandrels 44, the shuttle table 32 returns to first loading station 34 and on the way, flap 68 pushes finished preforms 60 down chute 59 whereat preforms 60 are removed for packaging or further processing.

From the second loading station to the first loading station, insert detection system 20 checks shuttle table 32 for the presence of any remaining inserts 27. If any inserts 27 are detected, alarm 52 is sounded. Operation may be stopped or robot tooling plate 61 may be recycled with shuttle table 32 to pickup any remaining inserts 27.

En route from first loading station 34 to second loading station 35, shuttle table 32 via flap 68 also moves rejected preforms 60 into discard area 70 by scraping across table 58 toward discard area 70. In this scenario, robot tooling plate 61 has previously unloaded rejected or aborted preform 60 onto table 58 for discard.

From second loading station 35, robot tooling plate 61 with inserts 27 removed from mandrels 44 via vacuum tubes 66 moves inserts 27 to overmolding station 18. At overmolding station 18, injection molding machine 72 is preferably operative to overmold an additional layer or layers on insert 27. Accordingly, inserts 27 are dropped onto cores 31 of mold portion 74 of injection molding machine 72 through releasing the vacuum in tubes 66 and preferably blowing pressurized air therethrough. Mold portion 76 with mold cavities 78 is moved to a clamped position with mold portion 74, and inserts 27 are then overmolded with an additional layer or additional layers. Insert detection system 20 is preferably again active to check the presence of inserts 27 on mold cores 31 via system 77 using a camera (shown schematically), prior to molding, which system 77 using a camera is preferably operable to check for the level of light reflection in the mold cores, the level detected indicative of the absence or presence of inserts. After molding, the mold portions 74 and 76 are opened and robot tooling plate 61 via tubes 66 removes finished preforms 60 from the mold cores 31 and finished preforms 60 are subsequently moved to and cooled in the carrier plate (not shown but incorporated by reference). Finally, the cooled preforms are removed from the carrier plate and transported via tooling plate 61 for release onto table 58.

The primary advantage of this invention is that a comprehensive system for unscrambling, handling, moving and overmolding articles while sensing the position of the same throughout the system, is provided. Another advantage of this invention is that a comprehensive system for handling preform inserts for subsequent overmolding to form multi-layered preforms is provided, wherein the system continuously operates to unscramble, arrange, transport, sense, and overmold the inserts. Still another advantage of this invention is that a comprehensive system for overmolding preform inserts to form multi-layered preforms is provided, which system includes an insert detection system for continually tracking the presence or absence of the preform inserts in various stages in the system. And still another advantage of this invention is that a comprehensive system for overmolding preform inserts for forming preforms is provided, which system and process are operative to unscramble and insert inserts into a mold as well as removed finished preforms from the mold and direct the same to a removal station.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. A system for manufacturing multi-layered preforms (60) from inserts (27), comprising:
means (18) for molding said inserts (27) into said multi-layered preforms (60);
means (14) for arranging said inserts (27) used in forming said preforms (60) into proper position for subsequent relocation to said means (18) for molding;
a first loading station (34) for receiving said inserts (27) from said means (14) for arranging, wherein said inserts (27) are properly positioned for said means (18) for molding when located with said first loading station (34);
a second loading station (35);
means (32) for moving said inserts (27) from said first loading station (34) to said second loading station (35);
means for relocating said inserts (27) from said second molding station (35) to said means (18) for molding including means (66) for engaging and releasing said inserts (27) for removing said inserts (27) from said means (32) for moving and for placing said inserts (27) in said means (18) for molding;
means (20) for detecting if said inserts (27) are at least one of present and absent during movement through said system (10);
characterized in that
said means for relocating comprises a robot tooling plate (61) movable between said means (32) for moving and said means (18) for molding, wherein said robot tooling plate (61) including said means (66) for engaging and releasing is used also for removing said preforms (60) from said means (18) for molding and placing said preforms (60) back in the second loading (35) station.

2. The system according to claim 1, further comprising multi-layered preform (60) receiving means (58) for receiving said multi-layered preforms (60) from said means (66) for engaging and releasing said multi-layered preforms (60), and wherein said multilayered preform (60) receiving means (58) is positioned under said means (32) for moving said preforms (60).

3. The system according to claim 2, wherein said means (66) for engaging and releasing said preforms (60) includes a plurality of mechanisms which engage and support said preforms (60) and wherein said means (32) for moving includes a plurality of openings (62) positioned between elements (44) adapted to engage said inserts (27) on said means (32) for moving through which said multi-layered preforms (60) pass for reaching said multi-layered preform (60) receiving means (58).

4. The system according to claim 1, wherein said means (66) for engaging and releasing said inserts (27) and for engaging and releasing said preforms (60) comprises means for applying a vacuum which through said tooling plate (61) and to said inserts (27) and said preforms (60), and means (61) for applying a vacuum is operative to release said preforms (60) into said openings (62) for removal via said multilayered preform (60) receiving means (58).

5. The system according to one of claims 2 - 4, wherein said means for moving (32) further includes means (68) for displacing said preforms (60) on said multilayer preform (60) receiving means (58) to one of a further processing area and discard area (70).

6. The system according to at least one of claims 1 - 5, further comprising an indicator (52), wherein if at least one insert (27) is pre-sent where said at least one insert (27) should be absent or wherein if at least one insert (27) is absent where said insert (27) should be present, an indicator (52) thereof is actuated.

7. The system according to claim 6, further including an indicator (52), wherein said means for detecting (20) is positioned juxtapose said means (32) for moving and wherein if en route from said first loading station (34) to said second loading station (35) an insert (27) is detected as absent, said indicator (52) is activated.

8. The system according to claim 6, wherein said means for detecting (20) is positioned juxtapose said means (32) for moving and wherein if en route from said second loading station (35) to said first loading station (34) an insert is detected as present, said indicator (52) is activated.

9. The system according to at least one of claims 1 - 8, wherein said first loading station (34) further comprises:
means (30, 36) for collecting and aligning said inserts (27) as said inserts (27) are provided from said means (14) for arranging; and
means for releasing said inserts (27) from said means (30, 36) for collecting,
wherein said means (32) for moving receives said plurality inserts (27) from said means (30, 36) for collecting via said means for releasing.

10. The system according to at least one of claims 1 - 9, wherein said means (32) for moving includes a plurality of elements (44) adapted to engage said inserts (27), and wherein said means for detecting comprises a sensor (50) adapted to sense whether each of said elements (44) has one of said inserts (27), said indicator (20) comprising an alarm (52) adapted to sound if one of said elements (44) is determined to be absent when one of said inserts (27) should be present and if one of said elements (44) is determined to be present when one of said inserts (27) should be absent.

11. The system according to claim 9 or 10, wherein said means for collecting comprises an insert spacing device (30a - d) and supports (36) positioned under said insert spacing device (30a - d) and under said spaced inserts (27), and wherein said means for releasing comprises said supports (36) being movable from under said inserts (27) for releasing said inserts (27) to said means for moving (32).

12. The system according to claim 11, wherein said means for moving comprises a shuttle table (32) and said elements comprise pins (44) extending from said shuttle table (32), said pins (44) spaced to align with said inserts (27) while said inserts (27) are positioned on said insert spacing device (30a - d), wherein upon moving said supports (36) said inserts (27) are released onto said pins (44).

13. The system according to at least one of the claims 1 - 12, further comprising a second means (77) for detecting said inserts (27) for determining if said inserts (27) are with said means (18) for molding, wherein if one of said inserts (27) is detected as absent an indicator is actuated.

14. The system according to claim 13, wherein said means (18) for molding includes mold cores (31) and said second means (77) for detecting comprises an insert detection means for scanning said mold cores (31) and determining, if any of said inserts (27) are missing, said indicator comprising an alarm which is actuated if any of said inserts (27) is missing.

15. The system according to claim 1, wherein said means for detecting said inserts (27) is further for determining if any of said inserts (27) remain with said means (61) for relocating, wherein if any of said inserts (27) is found to remain an indicator (52) is actuated.

16. The system according to at least one of claims 1 - 15, wherein said means (14) for arranging said inserts (27) includes means for unscrambling, arranging and orienting tubular inserts having at least one open end.

17. The system according to at least one of claims 1 - 16, wherein said means (14) for arranging said inserts (27) comprises means for arranging said inserts in columns and with a spacing which corresponds to the spacing in said means (18) for molding said inserts (27).

18. The system according to at least one of claims 1 - 17, wherein said means (32) for moving said inserts (27) comprises means for transporting said inserts in rows.

19. The system according to at least one of claims 1 - 18, including means to transfer said inserts onto an insert handling means.

20. The system according to at least one of claims 1 - 19, wherein said means (18) for molding said inserts (27) into said multi-layered preforms (60) includes means to inject at least one plastic material over said inserts.

## Patentansprüche

1. System zum Herstellen von mehrschichtigen Vorformlingen (60) mit Einsätzen (27)
- mit einer Einrichtung (18) zum Einformen dieser Einsätze (27) in diese mehrschichtigen Vorformlinge (60);
- mit einer Einrichtung (14) zum Anordnen der Einsätze (27), welche beim Formen dieser Vorformlinge (60) verwendet werden, in eine geeignete Position zum nachfolgenden Verbringen zu der Einrichtung (18) zum Formen;
- einer ersten Ladestation (34) zur Aufnahme der Einsätze (27) von der Einrichtung (14) zum Anordnungen, wobei die Einsätze (27) für die Einrichtung (18) zum Formen in geeigneter Weise positioniert sind, wenn sie in der ersten Ladestation (34) angeordnet werden;
- einer zweiten Ladestation (35);
- einer Einrichtung (32) zum Verbringen der Einsätze (27) von der ersten Ladestation (34) zu der zweiten Ladestation (35);
- einer Einrichtung zum Verbringen der Einsätze (27) von der zweiten Ladestation (35) zu der Einrichtung (18) zum Formen einschliesslich einer Einrichtung (66) zum Erfassen und zum Freigeben der Einsätze (27) zum Entfernen der Einsätze (27) von der Einrichtung (32) zum Verbringen und zum Anordnen der Einsätze (27) in der Einrichtung (18) zum Formen;
- einer Einrichtung (20) zum Detektieren, ob die Einsätze (27) vorhanden und/oder nicht vorhanden sind, während der Bewegung durch das System (10);
dadurch gekennzeichnet,
dass die Einrichtung zum Verbringen eine Roboterarbeitsplatte (61) umfasst, die zwischen der Einrichtung (32) zum Bewegen und der Einrichtung (18) zum Formen bewegbar ist, wobei die Roboterarbeitsplatte (61), welche die Einrichtung (66) zum Erfassen und Freigeben umfasst, auch dazu benutzt wird, die Vorformlinge (60) aus der Einrichtung (18) zum Formen zu entnehmen und die Vorformlinge (60) zurück in die zweite Ladestation (35) zu verbringen.

2. System nach Anspruch 1, das ferner eine Übernahmeeinrichtung (58) zur Übernahme der mehrschichtigen Vorformlinge (60) von der Einrichtung (66) zum Erfassen und Freigeben dieser mehrschichtigen Vorformlinge (60) umfasst, wobei die Übernahmeeinrichtung (58) für die mehrschichtigen Vorformlinge (60) unter der Einrichtung (32) zum Bewegen der Vorformlinge (60) angeordnet ist.

3. System nach Anspruch 2, wobei die Einrichtung (66) zum Erfassen und Freigeben der Vorformlinge (60) eine Mehrzahl von Mechanismen umfasst, welche die Vorformlinge (60) erfassen und halten, und wobei die Einrichtung (32) zum Bewegen eine Mehrzahl von Öffnungen (62) aufweist, die zwischen Elementen (44) angeordnet sind, die dazu geeignet sind, die Einsätze (27) an der Einrichtung (32) zum Bewegen zu erfassen, durch welche die mehrschichtigen Vorformlinge (60) hindurch gelangen, um die Übernahmeeinrichtung (58) für die mehrschichtigen Vorformlinge (60) zu erreichen.

4. System nach Anspruch 1, wobei die Einrichtung (66) zum Erfassen und Freigeben der Einsätze (27) und zum Erfassen und Freigeben der Vorformlinge (60) eine Einrichtung zum Anlegen eines Vakuums durch die Arbeitsplatte (61) und zu den Einsätzen (27) und den Vorformlingen (60) aufweist, und wobei die Einrichtung (61) zum Anlegen eines Vakuums dazu dient, die Vorformlinge (60) in die Öffnungen (62) zum Entfernen mittels der Übernahmeeinrichtung (58) für die mehrschichtigen Vorformlinge (60) freizugeben.

5. System nach einem der Ansprüche 2 bis 4, wobei die Einrichtung zum Bewegen (32) ferner eine Einrichtung (68) zum Verschieben von Vorformlingen (60) auf der Übernahmeeinrichtung (58) für mehrschichtige Vorformlinge (60) zu entweder einem weiteren Verarbeitungs - oder einem Ausschussbereich (70) umfasst.

6. System nach wenigstens einem der Ansprüche 1 bis 5, welches weiter eine Anzeigeeinrichtung (52) umfasst, von der eine Anzeige betätigt wird, wenn entweder ein Einsatz (27) vorhanden ist, wo ein Einsatz (27) nicht vorhanden sein sollte, oder ein Einsatz (27) nicht vorhanden ist, wo ein Einsatz (27) vorhanden sein sollte.

7. System nach Anspruch 6, welche eine Anzeigeeinrichtung (52) beinhaltet, wobei die Einrichtung (20) zum Erfassen der Einrichtung (32) zum Bewegen zugeordnet ist und wobei, wenn auf dem Weg von der ersten Ladestation (34) zu der zweiten Ladestation (35) festgestellt wird, dass ein Einsatz (27) nicht vorhanden ist, diese Anzeigeeinrichtung (52) betätigt wird.

8. System nach Anspruch 6, wobei die Einrichtung zum Erfassen (20) der Einrichtung (32) zum Bewegen zugeordnet ist und wobei, wenn auf dem Weg von der zweiten Ladestation (35) zu der ersten Ladestation (34) ein Einsatz (27) als vorhanden detektiert wird, die Anzeigeeinrichtung (52) aktiviert wird.

9. System nach wenigstens einem der Ansprüche 1 bis 8, wobei die erste Ladestation (34) ferner folgendes umfasst:
eine Einrichtung (30, 36) zum Aufnehmen und Ausrichten der Einsätze (27), wenn die Einsätze (27) von der Einrichtung (14) zum Anordnen übernommen werden;
und eine Einrichtung zum Freigeben der Einsätze (27) von der Einrichtung (30, 36) zum Aufnehmen,
wobei die Einrichtung (32) zum Bewegen die Mehrzahl von Einsätze (27) von der Einrichtung (30, 36) zum Übernehmen über die Einrichtung zum Freigeben erhält.

10. System nach wenigstens einem der Ansprüche 1 bis 9, wobei die Einrichtung (32) zum Bewegen eine Mehrzahl von Elementen (44) umfasst, die geeignet sind, die Einsätze (27) zu erfassen, und wobei die Einrichtung zum Detektieren einen Sensor (50) umfasst, der dazu geeignet ist, zu ermitteln, ob jedes der Elemente (44) einen der Einsätze (27) aufweist, wobei die Anzeigeeinrichtung (20) einen Alarm (52) umfasst, der dazu geeignet ist, zu tönen, wenn bei einem der Elemente (44) bestimmt wird, dass einer der Einsätze (27) nicht vorhanden zu ist, wenn er vorhanden sein sollte, und wenn bei einem der Elemente (44) bestimmt wird, dass einer der Einsätze (27) nicht vorhanden ist, wenn er vorhanden sein sollte.

11. System nach Anspruch 9 oder 10, wobei die Einrichtung zu Übernahme eine die Einsätze beabstandende Vorrichtung (30a bis 30d) und Halter (36) aufweist, die unter der die Einsätze (27) beabstandenden Vorrichtung (30a bis 30d) und unter den beabstandeten Einsätzen (27) angeordnet sind, und wobei die Einrichtung zum Freigeben umfasst, dass die Halter (36) unter den Einsätzen (27) wegbewegbar sind, um die Einsätze (27) zu der Einrichtung (32) zum Bewegen freizugeben.

12. System nach Anspruch 11, wobei die Einrichtung zum Bewegen einen Pendeltisch (32) umfasst und die Elemente Stifte (44) umfassen, welche sich von dem Pendeltisch (32) nach oben erstrecken, wobei die Stifte (44) in Ausrichtung mit den Einsätzen (27) beabstandet sind, während die Einsätze (27) in der die Einsätze beabstandenden Vorrichtung (30a bis 30d) angeordnet sind, wobei nach einer Bewegung der Halter (36) die Einsätze (27) auf die Stifte (44) freigegeben werden.

13. System nach wenigstens einem der Ansprüche 1 bis 12, welches ferner eine zweite Einrichtung (77) zum Detektieren der Einsätze (27) umfasst, um zu bestimmen, ob die Einsätze (27) in der Einrichtung (18) zum Formen vorhanden sind, wobei, wenn einer der Einsätze (27) als nicht vorhanden festgestellt wird, eine Anzeigeeinrichtung betätigt wird.

14. System nach Anspruch 13, wobei die Einrichtung (18) zum Formen Formkerne (31) umfasst und die zweite Einrichtung (77) zum Detektieren eine die Einsätze (27) detektierende Einrichtung zum Beobachten der Formkerne (31) umfasst und zum Bestimmen, ob einer der Einsätze (27) nicht vorhanden ist, wobei die Anzeigeeinrichtung einen Alarm umfasst, der betätigt wird, wenn einer der Einsätze (27) nicht vorhanden ist.

15. System nach Anspruch 1, wobei die Einrichtung zum Detektieren der Einsätze (27) ferner dazu bestimmt ist, ob einer der Einsätze (27) auf der Einrichtung (61) zum Bewegen verbleibt, wobei, wenn eine der Einsätze (27) als verbleibend vorgefunden wird, eine Anzeigeeinrichtung (52) aktiviert wird.

16. System nach wenigstens einem der Ansprüche 1 bis 15, wobei die Einrichtung (14) zum Anordnen der Einsätze (27) Einrichtungen zum Ordnen, Anordnen und Orientieren von röhrenförmigen Einsätzen (27) umfasst, die zumindest ein offenes Ende aufweisen.

17. System nach wenigstens einem der Ansprüche 1 bis 16, wobei die Einrichtung (14) zum Anordnen der Einsätze (27) eine Einrichtung zum Anordnen der Einsätze in Reihen und mit einem Abstand aufweist, welcher dem Abstand in der Einrichtung (18) zum Formen der Einsätze (27) entspricht.

18. System nach wenigstens einem der Ansprüche 1 bis 17, wobei die Einrichtung (32) zum Bewegen der Einsätze (27) eine Einrichtung zum Transportieren der Einsätze (27) in Reihen aufweist.

19. System nach wenigstens einem der Ansprüche 1 bis 18, welches eine Einrichtung zum Transfer der Einsätze (27) auf eine Einsätzehandlingeinrichtung aufweist.

20. System nach wenigstens einem der Ansprüche 1 bis 19, wobei die Einrichtung (18) zum Formen der Einsätze (27) in mehrschichtige Vorformlinge (60) eine Einrichtung zum Einspritzen von zumindest einem Kunststoffmaterial über die Einsätze aufweist.

## Revendications

1. Système de fabrication de préformes multicouches (60) à partir d'inserts (27), comprenant :
• des moyens (18) pour mouler les inserts (27) en préformes multicouches (60) ;
• des moyens (14) pour disposer les inserts (27) utilisés pour former les préformes (60), dans la position convenable pour un repositionnement ultérieur dans les moyens de moulage (18) ;
• un premier poste de chargement (34) pour recevoir les inserts (27) provenant des moyens (14), de manière à les disposer, les inserts (27) étant convenablement positionnés pour les moyens de moulage (18), lorsqu'ils sont mis en place dans le premier poste de chargement (34) ;
• un second poste de chargement (35) ;
• des moyens (32) pour faire passer les inserts (27) du premier poste de chargement (34) au second poste de chargement (35) ;
• des moyens pour repositionner les inserts (27) provenant du second poste de moulage (35), dans les moyens de moulage (18), comprenant des moyens (66) pour engager et libérer les inserts (27) de manière à retirer ces inserts des moyens (32) afin de les amener et de les placer dans les moyens de moulage (18) ;
• des moyens (20) pour détecter si l'un au moins des inserts (27) est présent et absent pendant le mouvement à travers le système (10) ;
caractérisé en ce que
les moyens de repositionnement comprennent une plaque d'outillage de robot (61) pouvant se déplacer entre les moyens de mouvement (32) et les moyens de moulage (18), la plaque d'outillage de robot (61) comprenant les moyens d'engagement et de libération (66), étant également utilisée pour retirer les préformes (60) des moyens de moulage (18), et pour ramener ces préformes (60) dans le second poste de chargement (35).

2. Système selon la revendication 1,
comprenant en outre
des moyens (58) de réception de préformes multicouches (60), pour recevoir les préformes multicouches (60) provenant des moyens (66) d'engagement et de libération de ces préformes multicouches (60), les moyens (58) de réception des préformes multicouches (60), étant positionnés sous les moyens (32) de déplacement des préformes (60).

3. Système selon la revendication 2,
dans lequel
• les moyens (66) d'engagement et de libération des préformes (60) comprennent un certain nombre de mécanismes qui s'engagent avec les préformes (60) et supportent celles-ci, et
• les moyens de déplacement (32) comprennent un certain nombre d'ouvertures (62) positionnées entre les éléments (44) et destinées à recevoir les inserts (27) sur les moyens de déplacement (32), ouvertures par lesquelles les préformes multicouches (60) passent pour atteindre les moyens (58) de réception de préformes multicouches (60).

4. Système selon la revendication 1,
dans lequel
• les moyens (66) d'engagement et de libération des inserts (27) et d'engagement et de libération des préformes (60), comprennent des moyens pour appliquer un vide à travers la plaque d'outillage (61) et vers les inserts (27) et les préformes (60), et
• les moyens d'application de vide servent à libérer les préformes (60) dans les ouvertures (62), pour les extraire par l'intermédiaire des moyens (58) de réception de préformes multicouches (60).

5. Système selon l'une des revendications 2 à 4,
dans lequel
les moyens de déplacement (32) comprennent en outre des moyens (68) pour déplacer les préformes (60) sur les moyens (58) de réception de préformes multicouches (60), vers l'une ou l'autre d'une zone de traitement supplémentaire ou d'une zone de rebut (70).

6. Système selon l'une au moins des revendications 1 à 5,
comprenant en outre un indicateur (52),
dans lequel si au moins un insert (27) est présent là où cet insert (27) devrait être absent, ou si au moins un insert (27) est absent là où cet insert (27) devrait être présent, l'indicateur (52) du système est déclenché.

7. Système selon la revendication 6, comprenant en outre un indicateur (52),
dans lequel
• les moyens de détection (20) sont juxtaposés aux moyens de déplacement (32), et
• si, sur le chemin allant du premier poste de chargement (34) au second poste de chargement (35), un insert (27) est détecté comme absent, l'indicateur (52) est actionné.

8. Système selon la revendication 6,
dans lequel
• les moyens de détection (20) sont juxtaposés aux moyens de déplacement (32), et
• si, sur le chemin allant du second poste de chargement (35) au premier poste de chargement (34), un insert est détecté comme présent, l'indicateur (52) est actionné.

9. Système selon l'une au moins des revendications 1 à 8,
dans lequel
• le premier poste de chargement (34) comprend en outre :
• des moyens (30, 36) pour collecter et aligner les inserts (27) lorsque ces inserts (27) sont fournis par les moyens de disposition (14) ; et
• des moyens pour libérer les inserts (27) des moyens de collecte (30, 36),
• les moyens de déplacement (32) recevant la pluralité d'inserts (27) provenant des moyens de collecte (30, 36), par l'intermédiaire des moyens de libération.

10. Système selon l'une au moins des revendications 1 à 9,
dans lequel
• les moyens de déplacement (32) comprennent un certain nombre d'éléments (44) destinés à venir en prise avec les inserts (27), et
• les moyens de détection comprennent un capteur (50) destiné à détecter si chacun des éléments (44) comporte l'un des inserts (27), l'indicateur (20) comprenant une alarme (52) destinée à résonner si l'un des éléments (44) est déterminé comme étant absent lorsque l'un des inserts (27) serait présent, et si l'un des éléments (44) est déterminé comme étant présent lorsque l'un des inserts (27) serait absent.

11. Système selon la revendication 9 ou 10,
dans lequel
• les moyens de collecte comprennent un dispositif d'espacement d'inserts (30a-30d) et des supports (36) positionnés sous le dispositif d'espacement d'inserts (30a-30d) et sous les inserts espacés (27), et
• les moyens de libération comprennent les supports (36) qui peuvent se déplacer du dessous des inserts (27) pour libérer ces inserts (27), vers les moyens de déplacement (32).

12. Système selon la revendication 11,
dans lequel
les moyens de déplacement comprennent une table de navette (32) et les éléments comprennent des broches (44) partant de la table de navette (32), les broches (44) étant espacées pour s'aligner avec les inserts (27) tandis que ces inserts (27) sont positionnés sur le dispositif d'espacement d'inserts (30a-30d), de sorte que, lorsqu'on déplace les supports (36), les inserts (27) sont libérés sur les broches (44).

13. Système selon l'une au moins des revendications 1 à 12,
comprenant en outre
un second moyen (77) pour détecter les inserts (27) de manière à déterminer si ces inserts (27) sont avec les moyens de moulage (18), de façon qu'un indicateur soit actionné si l'un des inserts (27) est détecté comme étant absent.

14. Système selon la revendication 13,
dans lequel
les moyens de moulage (18) comprennent des noyaux de moule (31) et les seconds moyens de détection (77) comprennent un moyen de détection d'inserts pour balayer les noyaux de moule (31) et déterminer si l'un quelconque des inserts (27) est manquant, l'indicateur comprenant une alarme qui est actionnée si l'un quelconque des inserts (27) est manquant.

15. Système selon la revendication 1,
dans lequel
le moyen de détection des inserts (27) sert en outre à déterminer si l'un quelconque des inserts (27) reste avec les moyens de repositionnement (61), de façon qu'un indicateur (52) est actionné si l'on trouve que l'un quelconque des inserts (27) est restant.

16. Système selon l'une au moins des revendications 1 à 15,
dans lequel
les moyens (14) de disposition des inserts (27) comprennent des moyens pour débrouiller, disposer et orienter des inserts tubulaires comportant au moins une extrémité ouverte.

17. Système selon l'une au moins des revendications 1 à 16,
dans lequel
les moyens (14) de disposition des inserts (27) comprennent des moyens pour disposer les inserts en colonnes ayant un espacement qui correspond à l'espacement dans les moyens de moulage (18) des inserts (27).

18. Système selon l'une au moins des revendications 1 à 17,
dans lequel
les moyens (32) de déplacement des inserts (27) comprennent des moyens pour transporter les inserts en rangées.

19. Système selon l'une au moins des revendications 1 à 18,
comprenant des moyens pour transférer les inserts sur un moyen de manipulation d'inserts.

20. Système selon l'une au moins des revendications 1 à 19,
dans lequel
les moyens (18) de moulage des inserts (27) en préformes multicouches (60), comprennent des moyens pour injecter au moins une matière plastique sur les inserts.
